# EUROPEAN PATENT APPLICATION

(11) **EP 3 179 792 A1**
(43) Date of publication of application: **14.06.2017**
(21) Application number: 14899207.6
(22) Date of filing: 26.12.2014
(51) Int. Cl.: H04W 72/00

(54) **METHOD, APPARATUS, AND SYSTEM FOR CONFIGURING DEVICE-TO-DEVICE RESOURCE POOL**

(30) Priority: 06.08.2014 CN 201410385126
(71) Applicant: ZTE Corporation, Shenzhen, Guangdong 518057 (CN)
(72) Inventor: HUANG, Ying, Shenzhen Guangdong 518057 (CN); CHEN, Lin, Shenzhen Guangdong 518057 (CN); CHEN, Yuqin, Shenzhen Guangdong 518057 (CN)
(74) Representative: Brevalex
(86) International application number: PCT/CN2014/095201
(87) International publication number: WO 2016/019691

(57) **Abstract**

Provided is a Device-to-Device (D2D) resource pool configuration method, device and system. A D2D User Equipment (UE) receives D2D resource pool configuration information of an Evolved Node B (eNB); and the D2D UE acquires a D2D sending resource from the D2D resource pool configuration information, and performs D2D sending.

## Description

### TECHNICAL FIELD

The disclosure relates to a network management technology in the field of communications, and particularly to a Device-to-Device (D2D) resource pool configuration method, device and system.

### BACKGROUND

Along with development of wireless multimedia services, requirements of people on high data rate and user experiences increasingly grow, and higher requirements on system capacity and coverage of a conventional cellular network has been proposed. On the other hand, requirements of people on Proximity Services of knowing about and communicating with interested persons or things nearby gradually increase along with prevailing of applications such as a social network, short-distance data sharing and local advertising. A conventional cell-based cellular network has significant limitations in terms of supporting high data rate and proximity services. In such a requirement context, a D2D technology representative of a new trend of future development of communication technologies emerges. Application of a D2D technology may reduce a burden of a cellular network, reduce battery power consumption of a User Equipment (UE), increase data rate, improve robustness of network infrastructure and well meet the abovementioned requirements on a high-data rate service and proximity service.

For D2D discovery and D2D communication, if a D2D UE within coverage of a cellular network adopts contention-based resource acquisition, a D2D resource pool may be obtained from an Evolved Node B (eNB). Then, the D2D UE may contend for resources from the resource pool for D2D sending. In such a manner, the network side cannot effectively manage and control how the UE uses the D2D resource pool, quality of service of a D2D service cannot be ensured, and a problem about service continuity of the D2D service may also be caused.

### SUMMARY

In order to solve the technical problem, the disclosure is intended to provide a D2D resource pool configuration method, device and system, which may at least solve the problem in the related art.

An embodiment of the disclosure provides a D2D resource pool configuration method, which may be applied to a D2D UE, the method including that:
the D2D UE receives D2D resource pool configuration information of an eNB; and
the D2D UE acquires a D2D sending resource from the D2D resource pool configuration information, and performs D2D sending.

In the solution, the D2D resource pool configuration information may include at least one of: D2D resource pool information, a D2D resource pool use condition, Radio Resource Control (RRC) state information and a valid timer.

In the solution, the D2D resource pool information may include: D2D discovery resource pool information, and/or D2D communication resource pool information, and/or D2D communication Scheduling Assignment (SA) resource pool information, and/or D2D communication data resource pool information;
the D2D resource pool use condition may include: limited use or unlimited use; the limited use may be use under an abnormal condition, or use within coverage of a cellular network, or use outside the coverage of the cellular network; and
the RRC state information may indicate an RRC state of UE capable of using the D2D resource pool information, and may include: a CONNECTED state, or an IDLE state, or the CONNECTED state and the IDLE state.

In the solution, the step that the D2D UE acquires the D2D sending resource from the D2D resource pool configuration information, and performs D2D sending may include that:
when the D2D UE is in the IDLE state, the D2D UE receives the D2D resource pool configuration information from a System Information Block (SIB), and if the D2D resource pool use condition included in the D2D resource pool configuration information is use under the abnormal condition and the D2D UE is to perform D2D sending, the D2D UE initiates an RRC connection establishment process;
when the D2D UE successfully establishes an RRC connection, the D2D UE interacts with the eNB to acquire dedicated D2D sending resource information allocated by the eNB; and when the D2D UE has tried to establish the RRC connection for N times but fails, N being a positive integer more than or equal to 1, it is determined that the D2D UE is under the abnormal condition, and the D2D UE acquires the D2D resource pool information from the D2D resource pool configuration information, and contends for the D2D sending resource for D2D sending according to the D2D resource pool information.

In the solution, the step that the D2D UE acquires the D2D sending resource from the D2D resource pool configuration information, and performs D2D sending may include that: if the D2D resource pool configuration information received from the SIB or RRC dedicated signalling by the D2D UE in the CONNECTED state includes the valid timer, the D2D UE in the CONNECTED state starts the valid timer after entering the abnormal condition, and performs D2D sending by virtue of a D2D resource pool in the D2D resource pool configuration information in a validity period of the valid timer; or, if the D2D resource pool configuration information received from the SIB by the D2D UE in the IDLE state includes the valid timer, the D2D UE in the IDLE state starts the valid timer after entering the abnormal condition, and performs D2D sending by virtue of the D2D resource pool in the D2D resource pool configuration information in the validity period of the valid timer; or, if the D2D resource pool configuration information received from the SIB by the D2D UE in the IDLE state includes the valid timer, the D2D UE in the IDLE state starts the valid timer after receiving the D2D resource pool information through the SIB if the D2D UE performs cell reselection, and performs D2D sending by virtue of the resource pool in the D2D resource pool configuration information in the validity period of the valid timer, wherein the abnormal condition of the D2D UE in the CONNECTED state may include: T301 or T311 validation, or serving cell reference signal receiving power being lower than a specific threshold value, and the specific threshold value may be acquired by the D2D UE from the eNB through the SIB or the RRC dedicated signalling, or may be pre-configured, or may be a predefined value.

In the solution, before the step that the D2D UE acquires the D2D sending resource from the D2D resource pool configuration information, and performs D2D sending, the method may further include that: when the RRC state information included in the D2D resource pool configuration information received by the D2D UE is the IDLE state, the D2D UE determines to use the D2D resource pool information in the D2D resource pool configuration information when being in the IDLE state; when the RRC state information included in the D2D resource pool configuration information received by the D2D UE is the CONNECTED state, the D2D UE determines to use the D2D resource pool information in the D2D resource pool configuration information when being in the CONNECTED state; when the use condition included in the D2D resource pool configuration information received by the D2D UE is use within the coverage of the cellular network, the D2D UE determines to use the D2D resource pool information in the D2D resource pool configuration information when being located within the coverage of the cellular network; and when the use condition included in the D2D resource pool configuration information received by the D2D UE is use outside the coverage of the cellular network, the D2D UE determines to use the D2D resource pool information in the D2D resource pool configuration information when being located outside the coverage of the cellular network.

The embodiment of the disclosure provides a D2D resource pool configuration method, which may be applied to an eNB, the method including that: the eNB sends D2D resource pool configuration information to enable D2D UE receiving the D2D resource pool configuration information to acquire a D2D sending resource from the D2D resource pool configuration information and perform D2D sending.

In the solution, the D2D resource pool configuration information may include at least one: D2D resource pool information, a D2D resource pool use condition, RRC state information and a valid timer.
In the solution, the D2D resource pool information may include: D2D discovery resource pool information, and/or D2D communication resource pool information, and/or D2D communication SA resource pool information, and/or D2D communication data resource pool information; the D2D resource pool use condition may include: limited use and unlimited use; limited use may be use under an abnormal condition, or use within coverage of a cellular network, or use outside the coverage of the cellular network; and the RRC state information may indicate an RRC state of UE capable of using the D2D resource pool information, and may include: a CONNECTED state, or an IDLE state, or the CONNECTED state and the IDLE state.

The embodiment of the disclosure also provides D2D UE, which may include: a receiving unit, configured to receive D2D resource pool configuration information of an eNB; and a processing unit, configured to acquire a D2D sending resource from the D2D resource pool configuration information, and perform D2D sending.

In the solution, the D2D resource pool configuration information may include at least one of: D2D resource pool information, a D2D resource pool use condition, RRC state information and a valid timer.
In the solution, the D2D resource pool information may include: D2D discovery resource pool information, and/or D2D communication resource pool information, and/or D2D communication SA resource pool information, and/or D2D communication data resource pool information; the D2D resource pool use condition may include: limited use or unlimited use; the limited use may be use under an abnormal condition, or use within coverage of a cellular network, or use outside the coverage of the cellular network; and the RRC state information may indicate an RRC state of UE capable of using the D2D resource pool information, and may include: a CONNECTED state, or an IDLE state, or the CONNECTED state and the IDLE state.

In the solution, the receiving unit may specifically be configured to, when the D2D UE is in the IDLE state, receive the D2D resource pool configuration information from an SIB; and correspondingly, the processing unit may specifically be configured to, if the D2D resource pool use condition included in the D2D resource pool configuration information is use under the abnormal condition and the D2D UE is to perform D2D sending, initiate, by the D2D UE, an RRC connection establishment process, when the D2D UE successfully establishes an RRC connection, interact, by the D2D UE, with the eNB to acquire dedicated D2D sending resource information allocated by the eNB, and when the D2D UE fails to try to establish the RRC connection for N times, N being a positive integer more than or equal to 1, determine that the D2D UE is under the abnormal condition and, by the D2D UE, acquire the D2D resource pool information from the D2D resource pool configuration information and compete to acquire the D2D sending resource for D2D sending according to the D2D resource pool information.

In the solution, the receiving unit may specifically be configured to receive, by the D2D UE in the CONNECTED state, the D2D resource pool configuration information from the SIB or RRC dedicated signalling; and correspondingly, the processing unit may specifically be configured to, if the D2D resource pool configuration information includes the valid timer, start the valid timer after the D2D UE in the CONNECTED state enters the abnormal condition, and perform D2D sending by using a D2D resource pool received from a cell configured with the valid timer in a validity period of the valid timer, or perform D2D sending by using a D2D resource pool associated with the valid timer in the validity period of the valid timer, or perform D2D sending by using the D2D resource pool associated with the valid timer in the validity period of the valid timer.

In the solution, the processing unit may specifically be configured to, when the RRC state information included in the received D2D resource pool configuration information is the IDLE state, determine to use the D2D resource pool information in the D2D resource pool configuration information when the D2D UE is in the IDLE state; when the RRC state information included in the received D2D resource pool configuration information is the CONNECTED state, determine to use the D2D resource pool information in the D2D resource pool configuration information when the D2D UE is in the CONNECTED state; when the use condition included in the received D2D resource pool configuration information is use within the coverage of the cellular network, determine to use the D2D resource pool information in the D2D resource pool configuration information when the D2D UE is located within the coverage of the cellular network; and when the use condition included in the received D2D resource pool configuration information is use outside the coverage of the cellular network, determine to use the D2D resource pool information in the D2D resource pool configuration information when the D2D UE is located outside the coverage of the cellular network.

The embodiment of the disclosure also provides an eNB, which may include: a storage unit, configured to store D2D resource pool configuration information; and a sending unit, configured to send the D2D resource pool configuration information to enable D2D UE which receives the D2D resource pool configuration information to acquire a D2D sending resource from the D2D resource pool configuration information and perform D2D sending.

In the solution, the D2D resource pool configuration information may include at least one or combination of: D2D resource pool information, a D2D resource pool use condition, RRC state information and a valid timer. The D2D resource pool information may include: D2D discovery resource pool information, and/or D2D communication resource pool information, and/or D2D communication SA resource pool information, and/or D2D communication data resource pool information; the D2D resource pool use condition may include: limited use and unlimited use; limited use may be use under an abnormal condition, or use within coverage of a cellular network, or use outside the coverage of the cellular network; and the RRC state information may indicate an RRC state of UE capable of using the D2D resource pool information, and may include: a CONNECTED state, or an IDLE state, or the CONNECTED state and the IDLE state.

The embodiment of the disclosure provides a D2D resource pool configuration system, which may include: an eNB, configured to send D2D resource pool configuration information; and D2D UE, configured to receive the D2D resource pool configuration information, acquire a D2D sending resource from the D2D resource pool configuration information and perform D2D sending.

In the solution, the D2D UE may include: a receiving unit, configured to receive the D2D resource pool configuration information; and a processing unit, configured to acquire the D2D sending resource from the D2D resource pool configuration information, and perform D2D sending.

In the solution, the D2D resource pool configuration information may include at least one or combination of: D2D resource pool information, a D2D resource pool use condition, RRC state information and a valid timer.
In the solution, the D2D resource pool information may include: D2D discovery resource pool information, and/or D2D communication resource pool information, and/or D2D communication SA resource pool information, and/or D2D communication data resource pool information; the D2D resource pool use condition may include: limited use and unlimited use; limited use may be use under an abnormal condition, or use within coverage of a cellular network, or use outside the coverage of the cellular network; and the RRC state information may indicate an RRC state of UE capable of using the D2D resource pool information, and may include: a CONNECTED state, or an IDLE state, or the CONNECTED state and the IDLE state.

In the solution, the receiving unit may specifically be configured to, when the D2D UE is in the IDLE state, receive the D2D resource pool configuration information from an SIB; and correspondingly, the processing unit is configured to, if the D2D resource pool use condition comprised in the D2D resource pool configuration information is use under the abnormal condition and the D2D UE is to perform D2D sending, initiate an RRC connection establishment process, when the D2D UE successfully establishes an RRC connection, interact with the eNB to acquire dedicated D2D sending resource information allocated by the eNB, and when the D2D UE has tried to establish the RRC connection for N times but fails, N being a positive integer more than or equal to 1, determine that the D2D UE is under the abnormal condition and acquire the D2D resource pool information from the D2D resource pool configuration information and contend for the D2D sending resource for D2D sending according to the D2D resource pool information.

In the solution, the receiving unit may specifically be configured for the D2D UE in the CONNECTED state to receive the D2D resource pool configuration information from the SIB or RRC dedicated signalling; and correspondingly, the processing unit may specifically be configured to, if the D2D resource pool configuration information includes the valid timer, start the valid timer after the D2D UE in the CONNECTED state enters the abnormal condition, and perform D2D sending by using a D2D resource pool received from a cell configured with the valid timer in a validity period of the valid timer, or perform D2D sending by using a D2D resource pool associated with the valid timer in the validity period of the valid timer, or perform D2D sending by using the D2D resource pool associated with the valid timer in the validity period of the valid timer.

In the solution, the processing unit may specifically be configured to, when the RRC state information included in the received D2D resource pool configuration information is the IDLE state, determine to use the D2D resource pool information in the D2D resource pool configuration information when the D2D UE is in the IDLE state; when the RRC state information included in the received D2D resource pool configuration information is the CONNECTED state, determine to use the D2D resource pool information in the D2D resource pool configuration information when the D2D UE is in the CONNECTED state; when the use condition included in the received D2D resource pool configuration information is use within the coverage of the cellular network, determine to use the D2D resource pool information in the D2D resource pool configuration information when the D2D UE is located within the coverage of the cellular network; and when the use condition included in the received D2D resource pool configuration information is use outside the coverage of the cellular network, determine to use the D2D resource pool information in the D2D resource pool configuration information when the D2D UE is located outside the coverage of the cellular network.

In the solution, the eNB may include: a storage unit, configured to store the D2D resource pool configuration information; and a sending unit, configured to send the D2D resource pool configuration information to enable the D2D UE which receives the D2D resource pool configuration information to acquire the D2D sending resource from the D2D resource pool configuration information and perform D2D sending.

According to the D2D resource pool configuration method, device and system provided by the disclosure, the D2D UE may acquire the D2D sending resource from the pre-received D2D resource pool configuration information in a contention-based resource acquisition manner, so that service continuity of a D2D service may be ensured, and quality of service and user experiences of the D2D service may be improved.

### BRIEF DESCRIPTION OF THE DRAWINGS

Fig. 1 is a first processchart of a D2D resource pool configuration method according to an embodiment of the disclosure;
Fig. 2 is a schematic diagram of an application scenario of a D2D technology;
Fig. 3 is a second processchart of a D2D resource pool configuration method according to an embodiment of the disclosure;
Fig. 4 is a third processchart of a D2D resource pool configuration method according to an embodiment of the disclosure;
Fig. 5 is a fourth processchart of a D2D resource pool configuration method according to an embodiment of the disclosure;
Fig. 6 is a fifth processchart of a D2D resource pool configuration method according to an embodiment of the disclosure;
Fig. 7 is a sixth processchart of a D2D resource pool configuration method according to an embodiment of the disclosure;
Fig. 8 is a structure diagram of D2D UE according to an embodiment of the disclosure;
Fig. 9 is a structure diagram of an eNB according to an embodiment of the disclosure; and
Fig. 10 is a structure diagram of a D2D resource pool configuration system according to an embodiment of the disclosure.

### DETAILED DESCRIPTION

The disclosure will be further described below with reference to the drawings and specific embodiments in detail.

### Embodiment 1

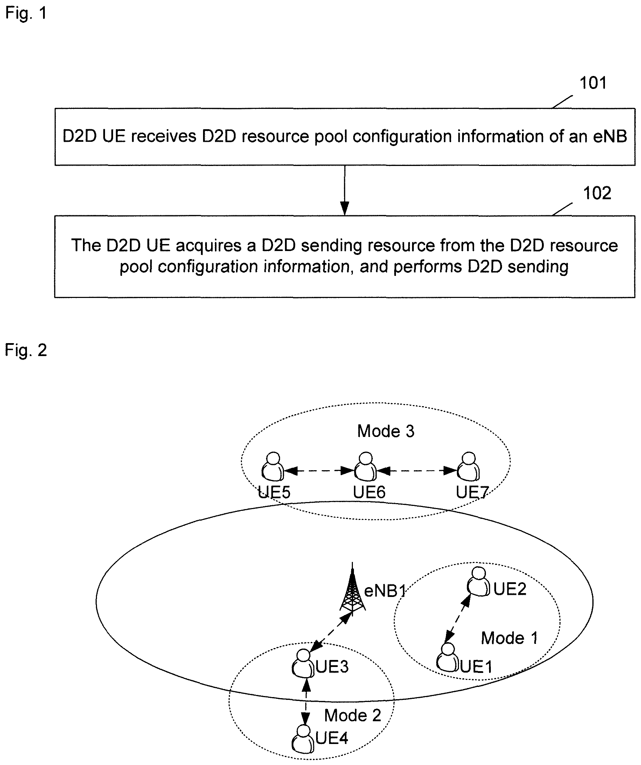

The embodiment of the disclosure provides a D2D resource pool configuration method, which is applied in a D2D UE. As shown in Fig. 1, the method includes:
Step 101: the D2D UE receives D2D resource pool configuration information of an eNB; and
Step 102: the D2D UE acquires a D2D sending resource from the D2D resource pool configuration information, and performs D2D sending.

Here, the D2D resource pool configuration information may include at least one or a combination of: D2D resource pool information, a D2D resource pool use condition, RRC state information and a valid timer, where the use condition and RRC state in the resource pool configuration information may be used in combination.

Here, the D2D resource pool information may include: D2D discovery resource pool information, and/or D2D communication resource pool information, and/or D2D communication SA resource pool information, and/or D2D communication data resource pool information.

The D2D resource pool use condition may include: limited use or unlimited use; limited use is use under an abnormal condition, or use within coverage of a cellular network, or use outside the coverage of the cellular network.

The RRC state information indicates an RRC state of UE capable of using the D2D resource pool information, and may include: a CONNECTED state, or an IDLE state, or the CONNECTED state and the IDLE state.

The D2D UE receives the D2D resource pool configuration information from the eNB through: a System Information Block; and/or, RRC dedicated signalling.

In an embodiment, the step that the D2D UE acquires the D2D sending resource from the D2D resource pool configuration information, and performs D2D sending includes that:
when the D2D UE is in the IDLE state, the D2D UE receives the D2D resource pool configuration information from the SIB, and if the D2D resource pool use condition included in the D2D resource pool configuration information is use under the abnormal condition and the D2D UE is required to perform D2D sending, the D2D UE initiates an RRC connection establishment process;
when the D2D UE successfully establishes an RRC connection, the D2D UE interacts with the eNB to acquire dedicated D2D sending resource information allocated by the eNB; and when the D2D UE has tried to establish the RRC connection for N times but fails, N being a positive integer more than or equal to 1, it is determined that the D2D UE is under the abnormal condition, and the D2D UE receives the D2D resource pool configuration information from the system broadcast system, acquires the D2D resource pool information from the D2D resource pool configuration information, and contends for the D2D sending resource for D2D sending according to the D2D resource pool information.

Here, the step that the D2D UE receives the D2D resource pool configuration information from the system broadcast system, acquires the D2D resource pool information from the D2D resource pool configuration information, and contends for the D2D sending resource for D2D sending according to the D2D resource pool information includes that: if the RRC state information included in the D2D resource pool configuration information received by the D2D UE is the IDLE state, the D2D UE may use the D2D resource pool information associated with the RRC state information only when being in the IDLE state; and if the RRC state information included in the D2D resource pool configuration information received by the D2D UE is the CONNECTED state, the D2D UE may use the D2D resource pool information associated with the RRC state information only when being in the CONNECTED state.

Or, the step that the D2D UE acquires the D2D sending resource from the D2D resource pool configuration information, and performs D2D sending may further include that:
if the D2D resource pool configuration information received from the SIB or the RRC dedicated signalling by the D2D UE in the CONNECTED state includes the valid timer, the D2D UE in the CONNECTED state starts the valid timer after entering the abnormal condition, and performs D2D sending by virtue of a D2D resource pool received from a cell configured with the valid timer in a validity period of the valid timer, wherein the D2D resource pool received from the cell configured with the valid timer may be received by the D2D UE through the RRC dedicated signalling or the SIB;
if the D2D resource pool configuration information received from the SIB by the D2D UE in the IDLE state includes the valid timer, the D2D UE in the IDLE state starts the valid timer after entering the abnormal condition, and performs D2D sending by virtue of a D2D resource pool associated with the valid timer in the validity period of the valid timer; and
if the D2D resource pool configuration information received from the SIB by the D2D UE in the IDLE state includes the valid timer, the D2D UE in the IDLE state starts the valid timer after receiving the D2D resource pool information through the SIB if the D2D UE performs cell reselection, and performs D2D sending by virtue of the resource pool associated with the valid timer in the validity period of the valid timer.

Here, the abnormal condition of the D2D UE in the CONNECTED state may include: T301 or T311 validation, or serving cell reference signal received power being lower than a specific threshold value, and the specific threshold value is acquired by the D2D UE from the eNB through the SIB or the RRC dedicated signalling.

Before the step that the D2D UE acquires the D2D sending resource from the D2D resource pool configuration information, and performs D2D sending, the method may further include that:
when the RRC state information included in the D2D resource pool configuration information received by the D2D UE is the IDLE state, the D2D UE determines to use the D2D resource pool information in the D2D resource pool configuration information when being in the IDLE state;
when the RRC state information included in the D2D resource pool configuration information received by the D2D UE is the CONNECTED state, the D2D UE determines to use the D2D resource pool information in the D2D resource pool configuration information when being in the CONNECTED state;
when the use condition included in the D2D resource pool configuration information received by the D2D UE is use within the coverage of the cellular network, the D2D UE determines to use the D2D resource pool information in the D2D resource pool configuration information when being located within the coverage of the cellular network; and
when the use condition included in the D2D resource pool configuration information received by the D2D UE is use outside the coverage of the cellular network, the D2D UE determines to use the D2D resource pool information in the D2D resource pool configuration information when being located outside the coverage of the cellular network.

A D2D technology in the embodiment may operate in an authorized frequency band or an unauthorized frequency band, and allows direct discovery/direct communication of multiple UEs supporting a D2D function, i.e. D2D UE, with network infrastructure or without network infrastructure. There are mainly three D2D application scenarios:
1) A UE 1 and a UE 2 perform data interaction under coverage of a cellular network, and user plane data does not pass through the network infrastructure, as shown in mode 1 in Fig. 2;
2) UEs in a weakly-covered/uncovered area perform relay transmission, as shown in mode 2 in Fig. 2, and a UE 4 with poorer signal quality is allowed to communicate with the network through an adjacent UE3 covered by the network, which may help an operator to extend coverage and improve capacity; and
3) direct communication among equipments is allowed under the condition that the cellular network may not work normally in case of an earthquake or emergency, as shown in mode 3 in Fig. 2, and a UE 5, a UE 6 and a UE 7 may perform one-hop or multi-hop data communication at a control plane and user plane without any network infrastructure.

The D2D technology usually includes a D2D discovery technology and a D2D communication technology:
1) the D2D discovery technology is used to judge/determine two or more D2D UEs are adjacent to each other (for example, within a range of D2D direct communication) or is used to judge/determine that a first UE is adjacent to a second UE; and
2) the D2D communication technology enables direct communication of part or all communication data between the D2D UEs without any network infrastructure.

Before D2D discovery or D2D communication, the D2D UE is required to acquire a corresponding radio resource at first. No manner for a D2D discovery or D2D communication resource, there are two resource allocation manners, i.e. contention-based resource acquisition (first resource allocation manner) and allocation of a dedicated resource to UE by an eNB (second resource allocation manner). Generally, with respect to the first resource allocation manner, an eNB or a system pre-allocates a D2D resource pool and D2D UEs participating in D2D discovery or D2D communication monitor the resource pool and acquire a D2D sending resource by contention. This manner is mainly employed by D2D UEs outside coverage of a cellular network, and may also be employed by D2D UEs within the coverage of the cellular network. For the D2D UEs within the coverage of the cellular network, a D2D contention resource pool configured by a serving cell may be used. For the D2D UEs outside the coverage of the cellular network, a pre-configured D2D contention resource pool may be used. With respect to the second resource allocation manner, the eNB allocates a proper D2D resource to the D2D UE as requested by the D2D UE. This manner may only be employed by the D2D UEs within the coverage of the cellular network.

As can be seen, by adopting the solution provided by the disclosure, the D2D UE may timely acquire the D2D sending resource in a contention-based resource acquisition manner when the D2D UE cannot acquire a dedicated resource from the eNB, so that service continuity of a D2D service may be ensured, and quality of service and user experiences of the D2D service may be improved.

### Embodiment 2

The embodiment of the disclosure discloses a D2D resource pool configuration method, which is applied in an eNB. The method includes that: the eNB sends D2D resource pool configuration information to enable a D2D UE which receives the D2D resource pool configuration information to acquire a D2D sending resource from the D2D resource pool configuration information and perform D2D sending.

Here, the D2D resource pool configuration information may include at least one or combination of: D2D resource pool information, a D2D resource pool use condition, RRC state information and a valid timer.

Here, the D2D resource pool information may include: D2D discovery resource pool information, and/or D2D communication resource pool information, and/or D2D communication SA resource pool information, and/or D2D communication data resource pool information.

The D2D resource pool use condition may include: limited use or unlimited use; the limited use is use under an abnormal condition, or use within coverage of a cellular network, or use outside the coverage of the cellular network.

The RRC state information indicates an RRC state of UE capable of using the D2D resource pool information, and may include: a CONNECTED state, or an IDLE state, or the CONNECTED state and the IDLE state.

The D2D UE receives the D2D resource pool configuration information from the eNB in the following manner: a System Information Block, and/or, RRC dedicated signalling.

The D2D technology in the embodiment may operate in an authorized frequency band or an unauthorized frequency band, and allows direct discovery/direct communication of multiple UEs supporting a D2D function, i.e. D2D UE, with network infrastructure or without network infrastructure. There are mainly three D2D application scenarios:
1) A UE 1 and a UE 2 perform data interaction under coverage of a cellular network, and user plane data does not pass through the network infrastructure, as shown in mode 1 in Fig. 2;
2) UEs in a weakly-covered/uncovered area perform relay transmission, as shown in mode 2 in Fig. 2, and a UE 4 with poorer signal quality is allowed to communicate with the network through an adjacent UE3 covered by the network, which may help an operator to extend coverage and improve capacity; and
3) direct communication among equipments is allowed under the condition that the cellular network may not work normally in case of an earthquake or emergency, as shown in mode 3 in Fig. 2, and a UE 5, a UE 6 and a UE 7 may perform one-hop or multi-hop data communication at a control plane and user plane without any network infrastructure.

The D2D technology usually includes a D2D discovery technology and a D2D communication technology:
1) the D2D discovery technology is used to judge/determine two or more D2D UEs are adjacent to each other (for example, within a range of D2D direct communication) or is used to judge/determine that a first UE is adjacent to a second UE; and
2) the D2D communication technology enables direct communication of part or all communication data between the D2D UEs without any network infrastructure.

Before D2D discovery or D2D communication, the D2D UE is required to acquire a corresponding radio resource at first. No manner for a D2D discovery or D2D communication resource, there are two resource allocation manners, i.e. contention-based resource acquisition (first resource allocation manner) and allocation of a dedicated resource to UE by an eNB (second resource allocation manner). Generally, with respect to the first resource allocation manner, an eNB or a system pre-allocates a D2D resource pool and D2D UEs participating in D2D discovery or D2D communication monitor the resource pool and acquire a D2D sending resource by contention. This manner is mainly employed by D2D UEs outside coverage of a cellular network, and may also be employed by D2D UEs within the coverage of the cellular network. For the D2D UEs within the coverage of the cellular network, a D2D contention resource pool configured by a serving cell may be used. For the D2D UEs outside the coverage of the cellular network, a pre-configured D2D contention resource pool may be used. With respect to the second resource allocation manner, the eNB allocates a proper D2D resource to the D2D UE as requested by the D2D UE. This manner may only be employed by the D2D UEs within the coverage of the cellular network.

As can be seen, by adopting the solution provided by the disclosure, the D2D UE may timely acquire the D2D sending resource in a contention-based resource acquisition manner when the D2D UE cannot acquire a dedicated resource from the eNB, so that service continuity of a D2D service may be ensured, and quality of service and user experiences of the D2D service may be improved.

### Embodiment 3

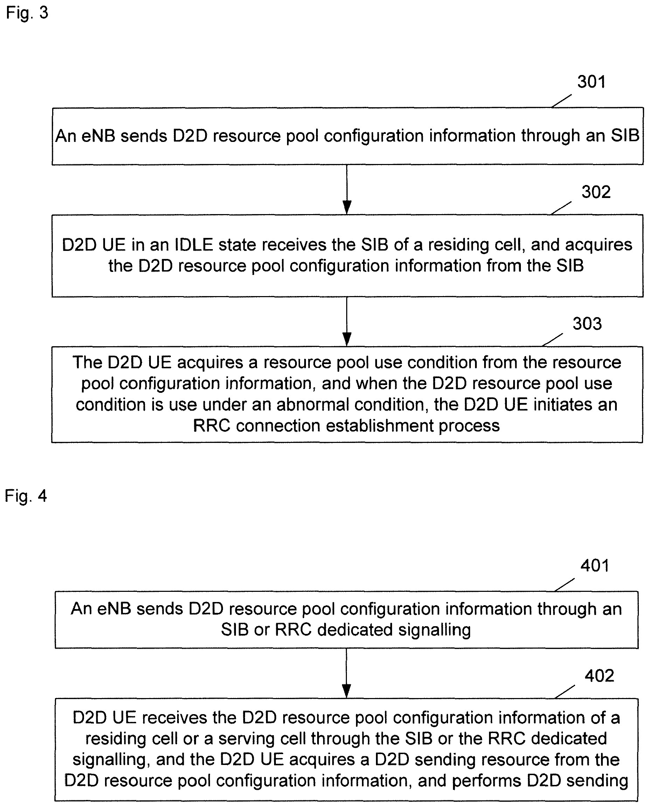

In this embodiment, a method under the condition that an SIB sent by an eNB includes D2D resource pool configuration information including a D2D resource pool use condition is described. As shown in Fig. 3, the method includes the following steps.

Step 301: the eNB sends D2D resource pool configuration information through an SIB, where the D2D resource pool configuration information includes D2D resource pool information and D2D resource pool use condition.

Here, the D2D resource pool information may include D2D discovery resource pool information and/or D2D communication resource pool information and/or D2D communication SA resource pool information and/or D2D communication data resource pool information; and the D2D resource pool use condition is use under an abnormal condition or use for all purposes.

Step 302: D2D UE in an IDLE state receives the SIB of a residing cell, and acquires the D2D resource pool configuration information from the SIB.

It is supposed that the D2D UE is intended to execute D2D discovery or sending of D2D communication, if the received D2D resource pool use condition is use for all purposes, the D2D UE may not initiate an RRC connection establishment process, and execute D2D discovery or sending of D2D communication in a contention-based resource acquisition manner by using a D2D resource pool broadcast in the SIB of the residing cell in the IDLE state.

Optionally, if the D2D UE is intended to use a dedicated resource allocated by the eNB, the D2D US initiates the RRC connection establishment process.

Step 303: the D2D UE acquires the resource pool use condition from the resource pool configuration information, and when the D2D resource pool use condition is use under the abnormal condition, the D2D UE initiates the RRC connection establishment process.

Furthermore, after the D2D UE initiates the RRC connection establishment process, if an RRC connection is successfully established, the UE may acquire a dedicated noncontention resource allocated by the eNB for D2D discovery or sending of D2D communication through RRC dedicated signalling. Or, the UE acquires the D2D resource pool information from the eNB through the RRC dedicated signalling, and executes D2D discovery or sending of D2D communication in the contention-based resource acquisition manner.

If the establishment of the RRC connection is failed, the following conditions may be included:
1) the UE does not pass access barring check;
2) an RRC connection denial message is received;
3) cell reselection occurs during running of T300, T302, T303, T305 or T306; and
4) T300 times out.

Then, the UE determines it is under the abnormal condition, and executes D2D discovery or sending of D2D communication in the contention-based resource acquisition manner by using the D2D resource pool acquired from the SIB of the residing cell.

Optionally, after establishment of the RRC connection has been failed for once or for N times, the UE may determine that it is under the abnormal condition, where N may be a default value, or may be configured by the eNB for the UE through the RRC dedicated signalling or the SIB.

If the UE subsequently successfully completes the RRC connection establishment process, the dedicated resource may be acquired from the eNB for D2D sending through the RRC dedicated signalling.

### Embodiment 4

In this embodiment, a method under the condition that D2D resource pool configuration information sent by an eNB includes RRC state information is described. As shown in Fig. 4, the method includes the following steps.

Step 401: the eNB sends D2D resource pool configuration information through an SIB or RRC dedicated signalling. The D2D resource pool configuration information includes D2D resource pool information and RRC state information.

Here, the D2D resource pool information may include D2D discovery resource pool information and/or D2D communication resource pool information and/or D2D communication SA resource pool information and/or D2D communication data resource pool information.

The RRC state information indicates an RRC state of UE capable of using the D2D resource pool information, and may include: a CONNECTED state, or an IDLE state, or the CONNECTED state and the IDLE state.

Step 402: the D2D UE receives the D2D resource pool configuration information of a residing cell or a serving cell through the SIB or the RRC dedicated signalling, and the D2D UE acquires a D2D sending resource from the D2D resource pool configuration information, and performs D2D sending.

The step that the D2D UE acquires the D2D sending resource from the D2D resource pool configuration information, and performs D2D sending may include the following scenarios.

Scenario 1: if the received RRC state information is the CONNECTED state, the UE may use the D2D resource pool information only when being in the RRC CONNECTED state; if the UE in the IDLE state is intended to execute D2D sending, it is necessary to initiate an RRC connection establishment process to try to enter the CONNECTED state; while the UE in the CONNECTED state may use the D2D resource pool for D2D sending, and if entering the IDLE state, the UE stops using the D2D resource pool which is only intended for the CONNECTED state.

Scenario 2: if the received RRC state information is the IDLE state, the UE may use the D2D resource pool information only when being in the RRC IDLE state. That is, the UE in the IDLE state may use the D2D resource pool information received from the SIB of the residing cell without entering the CONNECTED state. The UE stops using the D2D resource pool information only for the IDLE state once entering the RRC CONNECTED state, and instead, acquires a dedicated resource or contention resource pool from the eNB through the RRC dedicated signalling. If the UE in the CONNECTED state receives the D2D resource pool information which is only intended for the IDLE state, the UE may not use the D2D resource pool information when being in the CONNECTED state, and instead, requests the eNB for the D2D dedicated resource. The UE may use the D2D resource pool information which is only intended for the IDLE state after entering the IDLE state.

Scenario 3: if the received RRC state information is the CONNECTED state and the IDLE state, the corresponding D2D resource pool information may be used for the IDLE state, or may also be used for the CONNECTED state.

### Embodiment 5

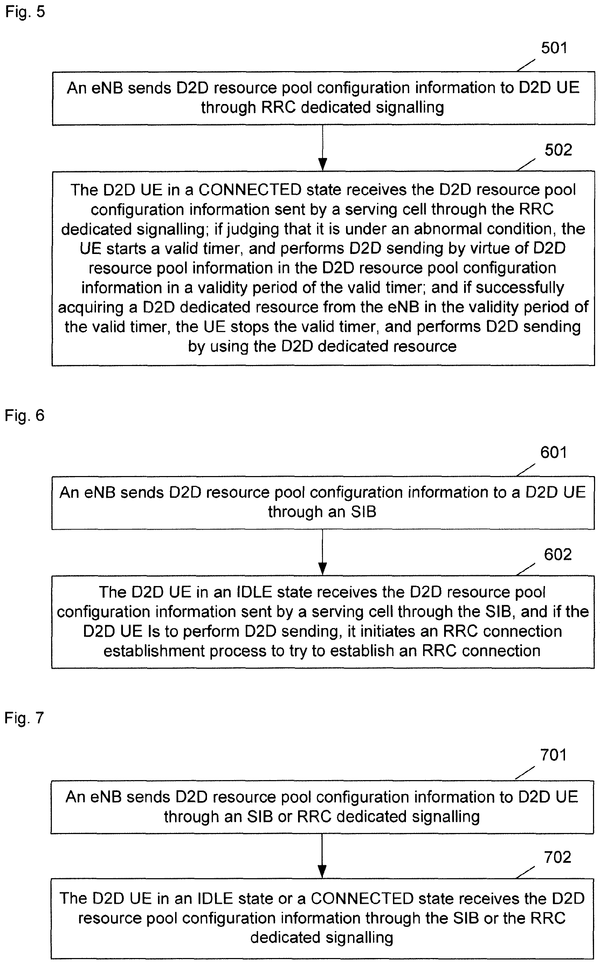

In this embodiment, a method under the condition that D2D resource pool configuration information sent by an eNB through RRC dedicated signalling includes valid timer information is described. As shown in Fig. 5, the method includes the following steps.

Step 501: the eNB sends D2D resource pool configuration information, which includes D2D resource pool information, a D2D resource pool use condition and a valid timer, to D2D UE through RRC dedicated signalling.

Here, the D2D resource pool information may include D2D discovery resource pool information and/or D2D communication resource pool information and/or D2D communication SA resource pool information and/or D2D communication data resource pool information, where the D2D resource pool use condition is use under an abnormal condition.

Step 502: the D2D UE in a CONNECTED state receives the D2D resource pool configuration information, which includes the D2D resource pool information, the D2D resource pool use condition and the valid timer, sent by a serving cell through the RRC dedicated signalling; if judging that it is under the abnormal condition, the UE starts the valid timer, and performs D2D sending by using the D2D resource pool information in the D2D resource pool configuration information in a validity period of the valid timer; and if successfully acquiring a D2D dedicated resource from the eNB in the validity period of the valid timer, the UE stops the valid timer, and performs D2D sending by using the D2D dedicated resource.

Specifically, the UE may judge that it is under the abnormal condition according to the following criterion:
1) T301 or T311 validation; and
2) serving cell reference signal receiving power being lower than a specific threshold value, where the specific threshold value may be acquired from the eNB by the D2D UE through an SIB or the RRC dedicated signalling.

### Embodiment 6

In this embodiment, a first method under the condition that D2D resource pool configuration information sent by an eNB through an SIB includes valid timer information is described. As shown in Fig. 6, the method includes the following steps.

Step 601: the eNB sends D2D resource pool configuration information, which includes D2D resource pool information, a D2D resource pool use condition and a valid timer, to D2D UE through an SIB.

Here, the D2D resource pool information includes D2D discovery resource pool information and/or D2D communication resource pool information and/or D2D communication SA resource pool information and/or D2D communication data resource pool information, where the D2D resource pool use condition is use under an abnormal condition.

Step 602: the D2D UE in an IDLE state receives the D2D resource pool configuration information, which includes the D2D resource pool information, the D2D resource pool use condition and the valid timer, sent by a serving cell through the SIB, where the D2D resource pool use condition is use under the abnormal condition.

If the UE is to perform D2D sending, it initiates an RRC connection establishment process to try to establish an RRC connection. If the RRC connection is successfully established, the UE may acquire a dedicated non-contention resource allocated by the eNB for D2D discovery or sending of D2D communication through RRC dedicated signalling. Or the UE may acquire the D2D resource pool information from the eNB through the RRC dedicated signalling and execute D2D discovery or sending of D2D communication in a contention-based resource acquisition manner. If the RRC connection establishment is failed, the following conditions may be included:
1) the UE does not pass access barring check, and a Tbarring timer is started;
2) an RRC connection denial message is received;
3) cell reselection occurs during running of T300, T302, T303, T305 or T306; and
4) T300 times out.

Then, the UE determines it is under the abnormal condition, starts the valid timer, and performs D2D sending by using the D2D resource pool in the D2D resource pool configuration information received from the SIB in a validity period of the valid timer. Optionally, after the RRC connection establishment is failed for once or for N times, the UE may determine that it is under the abnormal condition, where N may be a default value, or may be configured for the UE by the eNB through the RRC dedicated signalling or the SIB. If the UE subsequently successfully completes the RRC connection establishment process and acquires the D2D dedicated resource from the eNB during running of the valid timer, the valid timer may be stopped, and the D2D dedicated resource is used for D2D sending.

### Embodiment 7

In this embodiment, a second method under the condition that D2D resource pool configuration information sent by an eNB through an SIB includes valid timer information is described. As shown in Fig. 7, the method includes the following steps.

Step 701: the eNB sends D2D resource pool configuration information, which includes D2D resource pool information and a valid timer, to D2D UE through an SIB or RRC dedicated signalling. Optionally, the D2D resource pool configuration information may further include a D2D resource pool use condition, and the D2D resource pool use condition is use for all purposes or use under an abnormal condition. Here, the D2D resource pool information includes D2D discovery resource pool information and/or D2D communication resource pool information and/or D2D communication SA resource pool information and/or D2D communication data resource pool information, wherein the D2D resource pool use condition is use under an abnormal condition.

Step 702: the D2D UE in an IDLE state or a CONNECTED state receives the D2D resource pool configuration information through the SIB or the RRC dedicated signalling.

For the UE in the IDLE state, if performing cell reselection or detecting that it is in a network-uncovered state, the UE starts the valid timer, and performs D2D sending by using the D2D resource pool information in the D2D resource pool configuration information received from the SIB or the RRC dedicated signalling in a validity period of the valid timer. If acquiring new D2D resource pool configuration information from the eNB during running of the valid timer, the UE may stop the valid timer, and performs D2D sending by using the new D2D resource pool configuration information.

For the UE in the CONNECTED state, if performing cell handover (or receiving a handover command message) or detecting that it is in a network-uncovered state, the UE starts the valid timer, and performs D2D sending by using the D2D resource pool information in the D2D resource pool configuration information received from the SIB or the RRC dedicated signalling in the validity period of the valid timer. If acquiring new D2D resource pool configuration information or D2D dedicated resource from the eNB during running of the valid timer, the UE may stop the valid timer, and performs D2D sending by using the new D2D resource pool configuration information or the D2D dedicated resource.

### Embodiment 8

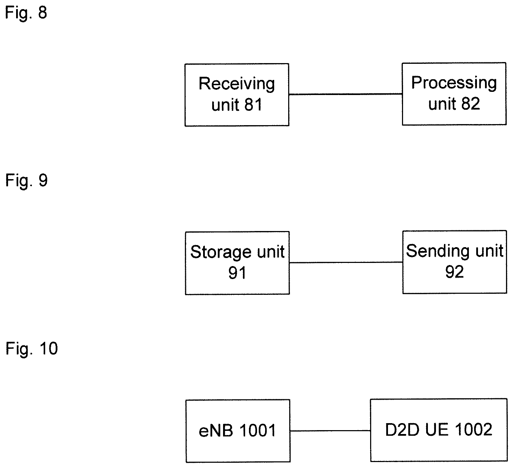

In this embodiment of the disclosure, a D2D UE is proposed. As shown in Fig. 8, the D2D UE includes a receiving unit 81 and a processing unit 82.

The receiving unit 81 is configured to receive D2D resource pool configuration information.

The processing unit 82 is configured to acquire a D2D sending resource from the D2D resource pool configuration information, and perform D2D sending.

Here, the D2D resource pool configuration information includes at least one or a combination of: D2D resource pool information, a D2D resource pool use condition, RRC state information and a valid timer.

Here, the D2D resource pool information includes: D2D discovery resource pool information, and/or D2D communication resource pool information, and/or D2D communication SA resource pool information, and/or D2D communication data resource pool information.

The D2D resource pool use condition includes: limited use or unlimited use; limited use is use under an abnormal condition, or use within coverage of a cellular network, or use outside the coverage of the cellular network.

The RRC state information indicates an RRC state of UE capable of using the D2D resource pool information, and includes: a CONNECTED state, or an IDLE state, or the CONNECTED state and the IDLE state.

The D2D UE receives the D2D resource pool configuration information from an eNB in the following manner: an SIB, and/or, RRC dedicated signalling.

In an embodiment, the receiving unit may be specifically configured to, when the D2D UE is in the IDLE state, receive the D2D resource pool configuration information from an SIB.

Correspondingly, the processing unit is configured to, if the D2D resource pool use condition comprised in the D2D resource pool configuration information is use under the abnormal condition and the D2D UE is to perform D2D sending, enable the D2D UE to initiate an RRC connection establishment process, when the D2D UE successfully establishes an RRC connection, enable the D2D UE to interact with the eNB to acquire dedicated D2D sending resource information allocated by the eNB, and when the D2D UE has tried to establish the RRC connection for N times but fails, N being a positive integer more than or equal to 1, determine that the D2D UE is under the abnormal condition and, by the D2D UE, acquire the D2D resource pool information from the D2D resource pool configuration information and contend for the D2D sending resource for D2D sending according to the D2D resource pool information.

The processing unit 82 may be specifically configured to, if the RRC state information included in the D2D resource pool configuration information received by the D2D UE is the IDLE state, determine that the D2D UE may use the D2D resource pool information associated with the RRC state information only when being in the IDLE state; and if the RRC state information included in the D2D resource pool configuration information received by the D2D UE is the CONNECTED state, determine that the D2D UE may use the D2D resource pool information associated with the RRC state information only when being in the CONNECTED state.

Or, the receiving unit may be specifically configured for the D2D UE in the CONNECTED state to receive the D2D resource pool configuration information from the SIB or RRC dedicated signalling; and
correspondingly, the processing unit is specifically configured to, if the D2D resource pool configuration information includes the valid timer, start the valid timer after the D2D UE in the CONNECTED state enters the abnormal condition, and perform D2D sending by using a D2D resource pool received from a cell configured with the valid timer in a validity period of the valid timer, or perform D2D sending by using a D2D resource pool associated with the valid timer in the validity period of the valid timer, or perform D2D sending by using the D2D resource pool associated with the valid timer in the validity period of the valid timer.

Here, the abnormal condition of the D2D UE in the CONNECTED state includes: T301 or T311 validation, or serving cell reference signal received power being lower than a specific threshold value, and the specific threshold value is acquired by the D2D UE from the eNB through the SIB or the RRC dedicated signalling.

The processing unit 82 may be specifically configured to, when the RRC state information included in the D2D resource pool configuration information received by the D2D UE is the IDLE state, determine to use the D2D resource pool information in the D2D resource pool configuration information when the D2D UE is in the IDLE state; when the RRC state information included in the D2D resource pool configuration information received by the D2D UE is the CONNECTED state, determine to use the D2D resource pool information in the D2D resource pool configuration information when the D2D UE is in the CONNECTED state; when the use condition included in the D2D resource pool configuration information received by the D2D UE is use within the coverage of the cellular network, determine to use the D2D resource pool information in the D2D resource pool configuration information when the D2D UE is located within the coverage of the cellular network; and when the use condition included in the D2D resource pool configuration information received by the D2D UE is use outside the coverage of the cellular network, determine to use the D2D resource pool information in the D2D resource pool configuration information when the D2D UE is located outside the coverage of the cellular network.

The D2D technology in the embodiment may operate in an authorized frequency band or an unauthorized frequency band, and allows direct discovery/direct communication of multiple UEs supporting a D2D function, i.e. D2D UE, with network infrastructure or without network infrastructure. There are mainly three D2D application scenarios:
1) A UE 1 and a UE 2 perform data interaction under coverage of a cellular network, and user plane data does not pass through the network infrastructure, as shown in mode 1 in Fig. 2;
2) UEs in a weakly-covered/uncovered area perform relay transmission, as shown in mode 2 in Fig. 2, and a UE 4 with poorer signal quality is allowed to communicate with the network through an adjacent UE3 covered by the network, which may help an operator to extend coverage and improve capacity; and
3) direct communication among equipments is allowed under the condition that the cellular network may not work normally in case of an earthquake or emergency, as shown in mode 3 in Fig. 2, and a UE 5, a UE 6 and a UE 7 may perform one-hop or multi-hop data communication at a control plane and user plane without any network infrastructure.

The D2D technology usually includes a D2D discovery technology and a D2D communication technology:
1) the D2D discovery technology is used to judge/determine two or more D2D UEs are adjacent to each other (for example, within a range of D2D direct communication) or is used to judge/determine that a first UE is adjacent to a second UE; and
2) the D2D communication technology enables direct communication of part or all communication data between the D2D UEs without any network infrastructure.

Before D2D discovery or D2D communication, the D2D UE is required to acquire a corresponding radio resource at first. No manner for a D2D discovery or D2D communication resource, there are two resource allocation manners, i.e. contention-based resource acquisition (first resource allocation manner) and allocation of a dedicated resource to UE by an eNB (second resource allocation manner). Generally, with respect to the first resource allocation manner, an eNB or a system pre-allocates a D2D resource pool and D2D UEs participating in D2D discovery or D2D communication monitor the resource pool and acquire a D2D sending resource by contention. This manner is mainly employed by D2D UEs outside coverage of a cellular network, and may also be employed by D2D UEs within the coverage of the cellular network. For the D2D UEs within the coverage of the cellular network, a D2D contention resource pool configured by a serving cell may be used. For the D2D UEs outside the coverage of the cellular network, a pre-configured D2D contention resource pool may be used. With respect to the second resource allocation manner, the eNB allocates a proper D2D resource to the D2D UE as requested by the D2D UE. This manner may only be employed by the D2D UEs within the coverage of the cellular network.

As can be seen, by adopting the solution provided by the disclosure, the D2D UE may timely acquire the D2D sending resource in a contention-based resource acquisition manner when the D2D UE cannot acquire a dedicated resource from the eNB, so that service continuity of a D2D service may be ensured, and quality of service and user experiences of the D2D service may be improved.

### Embodiment 9

In this embodiment of the disclosure, an eNB is proposed. As shown in Fig. 9, the eNB includes a storage unit 91 and a sending unit 92.
a storage unit 91, configured to store D2D resource pool configuration information; and
a sending unit 92, configured to send the D2D resource pool configuration information to enable D2D UE which receives the D2D resource pool configuration information to acquire a D2D sending resource from the D2D resource pool configuration information and perform D2D sending.

Here, the D2D resource pool configuration information includes at least one or a combination of: D2D resource pool information, a D2D resource pool use condition, RRC state information and a valid timer.

Here, the D2D resource pool information may include: D2D discovery resource pool information, and/or D2D communication resource pool information, and/or D2D communication SA resource pool information, and/or D2D communication data resource pool information.

The D2D resource pool use condition may include: limited use and unlimited use; limited use is use under an abnormal condition, or use within coverage of a cellular network, or use outside the coverage of the cellular network; and

The RRC state information indicates an RRC state of UE capable of using the D2D resource pool information, and may include: a CONNECTED state, or an IDLE state, or the CONNECTED state and the IDLE state.

The D2D UE receives the D2D resource pool configuration information from the eNB in the following manner: an SIB, and/or, RRC dedicated signalling.

The D2D technology in the embodiment may operate in an authorized frequency band or an unauthorized frequency band, and allows direct discovery/direct communication of multiple UEs supporting a D2D function, i.e. D2D UE, with network infrastructure or without network infrastructure. There are mainly three D2D application scenarios:
1) A UE 1 and a UE 2 perform data interaction under coverage of a cellular network, and user plane data does not pass through the network infrastructure, as shown in mode 1 in Fig. 2;
2) UEs in a weakly-covered/uncovered area perform relay transmission, as shown in mode 2 in Fig. 2, and a UE 4 with poorer signal quality is allowed to communicate with the network through an adjacent UE3 covered by the network, which may help an operator to extend coverage and improve capacity; and
3) direct communication among equipments is allowed under the condition that the cellular network may not work normally in case of an earthquake or emergency, as shown in mode 3 in Fig. 2, and a UE 5, a UE 6 and a UE 7 may perform one-hop or multi-hop data communication at a control plane and user plane without any network infrastructure.

The D2D technology usually includes a D2D discovery technology and a D2D communication technology:
1) the D2D discovery technology is used to judge/determine two or more D2D UEs are adjacent to each other (for example, within a range of D2D direct communication) or is used to judge/determine that a first UE is adjacent to a second UE; and
2) the D2D communication technology enables direct communication of part or all communication data between the D2D UEs without any network infrastructure.

Before D2D discovery or D2D communication, the D2D UE is required to acquire a corresponding radio resource at first. No manner for a D2D discovery or D2D communication resource, there are two resource allocation manners, i.e. contention-based resource acquisition (first resource allocation manner) and allocation of a dedicated resource to UE by an eNB (second resource allocation manner). Generally, with respect to the first resource allocation manner, an eNB or a system pre-allocates a D2D resource pool and D2D UEs participating in D2D discovery or D2D communication monitor the resource pool and acquire a D2D sending resource by contention. This manner is mainly employed by D2D UEs outside coverage of a cellular network, and may also be employed by D2D UEs within the coverage of the cellular network. For the D2D UEs within the coverage of the cellular network, a D2D contention resource pool configured by a serving cell may be used. For the D2D UEs outside the coverage of the cellular network, a pre-configured D2D contention resource pool may be used. With respect to the second resource allocation manner, the eNB allocates a proper D2D resource to the D2D UE as requested by the D2D UE. This manner may only be employed by the D2D UEs within the coverage of the cellular network.

As can be seen, by adopting the solution provided by the disclosure, the D2D UE may timely acquire the D2D sending resource in a contention-based resource acquisition manner when the D2D UE cannot acquire a dedicated resource from the eNB, so that service continuity of a D2D service may be ensured, and quality of service and user experiences of the D2D service may be improved.

In an embodiment, on the basis of the eNB and at least one D2D UE provided by embodiment 8 and embodiment 9, a D2D resource pool configuration system may be formed in the disclosure, and as shown in Fig. 10, includes:
an eNB 1001, configured to send D2D resource pool configuration information; and
a D2D UE 1002, configured to receive the D2D resource pool configuration information, acquire a D2D sending resource from the D2D resource pool configuration information and perform D2D sending.

The above is only the preferred embodiment of the disclosure and not intended to limit the scope of protection of the disclosure.

In some embodiments provided by the disclosure, it should be understood that the disclosed method, device and system may be implemented in another manner. The device embodiment described above is only schematic, and for example, division of the modules is only logic function division, and other division manners may be adopted during practical implementation. For example, multiple modules or components may be combined or integrated into another system, or some characteristics may be neglected or not executed. In addition, communication connection between each displayed or discussed component may be indirect coupling or communication connection, implemented through some interfaces, of the equipment or the modules, and may be electrical and mechanical or adopt other forms.

The abovementioned modules described as separate parts may or may not be physically separated, and parts displayed as modules may or may not be physical units, and namely may be located in the same place, or may also be distributed to multiple network units. Part or all of the modules may be selected to achieve the purpose of the solutions of the embodiment according to a practical requirement.

In addition, each function module in each embodiment of the disclosure may be integrated into a processing module, each module may also exist independently, and two or more than two modules may also be integrated into a module. The abovementioned integrated module may be implemented in a hardware form, and may also be implemented in form of hardware and software function unit.

Those skilled in the art should know that: all or part of the steps of the abovementioned method embodiment may be implemented by instructing related hardware through a program, the abovementioned program may be stored in a computer-readable storage medium, and the program is executed to execute the steps of the abovementioned method embodiment; and the abovementioned storage medium includes: various media capable of storing program codes such as mobile storage equipment, a Read-Only Memory (ROM), a magnetic disk or an optical disk.

Or, when being implemented in form of software function module and sold or used as an independent product, the integrated module of the embodiment of the disclosure may also be stored in a computer-readable storage medium. Based on such an understanding, the technical solutions of the embodiment of the disclosure substantially or parts making contributions to the conventional art may be embodied in form of software product, and the computer software product is stored in a storage medium, including a plurality of instructions configured to enable a piece of computer equipment (which may be a personal computer, a server, network equipment or the like) to execute all or part of the method in each embodiment of the disclosure. The abovementioned storage medium includes: various media capable of storing program codes such as mobile storage equipment, a ROM, a magnetic disk or an optical disk.

The disclosure is an uplink channel sending time sequence scheduling method and device recorded in an example, and only takes, but not limited to, the abovementioned embodiments as examples. Those skilled in the art should know that: the technical solutions recorded in each of the abovementioned embodiments may also be modified, or part or all of technical features therein may also be equivalently replaced; and these modifications or replacements shall avoid the essence of corresponding technical solutions departing from the scope of the technical solutions of each embodiment of the disclosure.

### INDUSTRIAL APPLICABILITY

The disclosure discloses the D2D resource pool configuration method, device and system, the D2D UE may acquire the D2D sending resource from the pre-received D2D resource pool configuration information in the contention-based resource acquisition manner, so that service continuity of a D2D service may be ensured, and quality of service and user experiences of the D2D service may be improved.

## Claims

1. A Device-to-Device, D2D, resource pool configuration method, applied in a D2D User Equipment, UE, **characterized by**, comprising:
receiving, by the D2D UE, D2D resource pool configuration information of an Evolved Node B, eNB; and
acquiring, by the D2D UE, a D2D sending resource from the D2D resource pool configuration information, and performing D2D sending.

2. The method according to claim 1, wherein the D2D resource pool configuration information comprises at least one of: D2D resource pool information, a D2D resource pool use condition, Radio Resource Control, RRC, state information and a valid timer.

3. The method according to claim 2, wherein
the D2D resource pool information comprises at least one of: D2D discovery resource pool information, D2D communication resource pool information, D2D communication Scheduling Assignment, SA, resource pool information, and D2D communication data resource pool information;
the D2D resource pool use condition comprises: limited use or unlimited use; the limited use is use under an abnormal condition, or use within coverage of a cellular network, or use outside the coverage of the cellular network; and
the RRC state information indicates an RRC state of UE capable of using the D2D resource pool information, and comprises: a CONNECTED state, or an IDLE state, or the CONNECTED state and the IDLE state.

4. The method according to any one of claims 1 to 3, wherein acquiring, by the D2D UE, the D2D sending resource from the D2D resource pool configuration information, and performing D2D sending comprises:
when the D2D UE is in the IDLE state, receiving, by the D2D UE, the D2D resource pool configuration information from a System Information Block, SIB, and if the D2D resource pool use condition comprised in the D2D resource pool configuration information is use under the abnormal condition and the D2D UE is to perform D2D sending, initiating, by the D2D UE, an RRC connection establishment process;
when the D2D UE successfully establishes an RRC connection, interacting, by the D2D UE, with the eNB to acquire dedicated D2D sending resource information allocated by the eNB; and when the D2D UE has tried to establish the RRC connection for N times but fails, N being a positive integer more than or equal to 1, determining that the D2D UE is under the abnormal condition, and acquiring, by the D2D UE, the D2D resource pool information from the D2D resource pool configuration information, and contending for the D2D sending resource for D2D sending according to the D2D resource pool information.

5. The method according to any one of claims 1 to 3, wherein acquiring, by the D2D UE, the D2D sending resource from the D2D resource pool configuration information, and performing D2D sending comprises:
if the D2D resource pool configuration information received from the SIB or RRC dedicated signalling by the D2D UE in the CONNECTED state comprises the valid timer, starting, by the D2D UE in the CONNECTED state, the valid timer after entering the abnormal condition, and performing D2D sending by using a D2D resource pool in the D2D resource pool configuration information in a validity period of the valid timer;
or, if the D2D resource pool configuration information received from the SIB by the D2D UE in the IDLE state comprises the valid timer, starting, by the D2D UE in the IDLE state after entering the abnormal condition, the valid timer, and performing, in the validity period of the valid timer, D2D sending by using the D2D resource pool in the D2D resource pool configuration information;
or, if the D2D resource pool configuration information received from the SIB by the D2D UE in the IDLE state comprises the valid timer, starting, by the D2D UE in the IDLE state after receiving the D2D resource pool information through the SIB, the valid timer if the D2D UE performs cell reselection, and performing, in the validity period of the valid timer, D2D sending by using the resource pool in the D2D resource pool configuration information, wherein the abnormal condition of the D2D UE in the CONNECTED state comprises: T301 or T311 validation, or serving cell reference signal receiving power being lower than a specific threshold value, wherein the specific threshold value is acquired by the D2D UE from the eNB through the SIB or the RRC dedicated signalling, or is pre-configured, or is a predefined value.

6. The method according to any one of claims 1 to 3, wherein before acquiring, by the D2D UE, the D2D sending resource from the D2D resource pool configuration information, and performing D2D sending, the method further comprises:
when the RRC state information comprised in the D2D resource pool configuration information received by the D2D UE is the IDLE state, determining, by the D2D UE, to use the D2D resource pool information in the D2D resource pool configuration information when being in the IDLE state;
when the RRC state information comprised in the D2D resource pool configuration information received by the D2D UE is the CONNECTED state, determining, by the D2D UE, to use the D2D resource pool information in the D2D resource pool configuration information when being in the CONNECTED state;
when the use condition comprised in the D2D resource pool configuration information received by the D2D UE is use within the coverage of the cellular network, determining, by the D2D UE, to use the D2D resource pool information in the D2D resource pool configuration information when being located within the coverage of the cellular network; and
when the use condition comprised in the D2D resource pool configuration information received by the D2D UE is use outside the coverage of the cellular network, determining, by the D2D UE, to use the D2D resource pool information in the D2D resource pool configuration information when being located outside the coverage of the cellular network.

7. A Device-to-Device, D2D, resource pool configuration method, applied in an Evolved Node B, eNB, **characterized by**, comprising:
sending, by the eNB, D2D resource pool configuration information, to enable D2D User Equipment, UE, which receives the D2D resource pool configuration information to acquire a D2D sending resource from the D2D resource pool configuration information and perform D2D sending.

8. The method according to claim 7, wherein the D2D resource pool configuration information comprises at least one of: D2D resource pool information, a D2D resource pool use condition, Radio Resource Control, RRC, state information and a valid timer,
wherein the D2D resource pool information comprises at least one of: D2D discovery resource pool information, D2D communication resource pool information, D2D communication Scheduling Assignment, SA, resource pool information, and D2D communication data resource pool information;
the D2D resource pool use condition comprises: limited use or unlimited use; limited use is use under an abnormal condition, or use within coverage of a cellular network, or use outside the coverage of the cellular network; and
the RRC state information indicates an RRC state of UE capable of using the D2D resource pool information, and comprises: a CONNECTED state, or an IDLE state, or the CONNECTED state and the IDLE state.

9. A Device-to-Device, D2D, User Equipment, UE, **characterized by**, comprising:
a receiving unit, configured to receive D2D resource pool configuration information; and
a processing unit, configured to acquire a D2D sending resource from the D2D resource pool configuration information, and perform D2D sending.

10. The D2D UE according to claim 9, wherein the D2D resource pool configuration information comprises at least one of: D2D resource pool information, a D2D resource pool use condition, Radio Resource Control, RRC, state information and a valid timer.

11. The D2D UE according to claim 10, wherein
the D2D resource pool information comprises at least one of: D2D discovery resource pool information, D2D communication resource pool information, D2D communication Scheduling Assignment, SA, resource pool information, and D2D communication data resource pool information;
the D2D resource pool use condition comprises: limited use or unlimited use; the limited use is use under an abnormal condition, or use within coverage of a cellular network, or use outside the coverage of the cellular network; and
the RRC state information indicates an RRC state of UE capable of using the D2D resource pool information, and comprises: a CONNECTED state, or an IDLE state, or the CONNECTED state and the IDLE state.

12. The D2D UE according to any one of claims 9 toll, wherein
the receiving unit is configured to, when the D2D UE is in the IDLE state, receive the D2D resource pool configuration information from a System Information Block, SIB; and
correspondingly, the processing unit is configured to, if the D2D resource pool use condition comprised in the D2D resource pool configuration information is use under the abnormal condition and the D2D UE is to perform D2D sending, initiate an RRC connection establishment process, when the D2D UE successfully establishes an RRC connection, interact with the eNB to acquire dedicated D2D sending resource information allocated by the eNB, and when the D2D UE has tried to establish the RRC connection for N times but fails, N being a positive integer more than or equal to 1, determine that the D2D UE is under the abnormal condition and acquire the D2D resource pool information from the D2D resource pool configuration information and contend for the D2D sending resource for D2D sending according to the D2D resource pool information.

13. The D2D UE according to any one of claims 9 to 11, wherein
the receiving unit is configured for the D2D UE in the CONNECTED state to receive the D2D resource pool configuration information from the SIB or RRC dedicated signalling; and
correspondingly, the processing unit is configured to:
if the D2D resource pool configuration information comprises the valid timer, start the valid timer after the D2D UE in the CONNECTED state enters the abnormal condition, and
perform, in a validity period of the valid timer, D2D sending by using a D2D resource pool received from a cell configured with the valid timer, or perform, in the validity period of the valid timer, D2D sending by using the D2D resource pool associated with the valid timer, or perform, in the validity period of the valid timer, D2D sending by using the D2D resource pool associated with the valid timer.

14. The D2D UE according to any one of claims 9 to 11, wherein the processing unit is configured to:
when the RRC state information comprised in the received D2D resource pool configuration information is the IDLE state, determine to use the D2D resource pool information in the D2D resource pool configuration information when the D2D UE is in the IDLE state;
when the RRC state information comprised in the received D2D resource pool configuration information is the CONNECTED state, determine to use the D2D resource pool information in the D2D resource pool configuration information when the D2D UE is in the CONNECTED state;
when the use condition comprised in the received D2D resource pool configuration information is use within the coverage of the cellular network, determine to use the D2D resource pool information in the D2D resource pool configuration information when the D2D UE is located within the coverage of the cellular network; and
when the use condition comprised in the received D2D resource pool configuration information is use outside the coverage of the cellular network, determine to use the D2D resource pool information in the D2D resource pool configuration information when the D2D UE is located outside the coverage of the cellular network.

15. An Evolved Node B, eNB, **characterized by**, comprising:
a storage unit, configured to store Device-to-Device, D2D, resource pool configuration information; and
a sending unit, configured to send the D2D resource pool configuration information to enable D2D User Equipment, UE, which receives the D2D resource pool configuration information to acquire a D2D sending resource from the D2D resource pool configuration information and perform D2D sending.

16. The eNB according to claim 15, wherein the D2D resource pool configuration information comprises at least one of: D2D resource pool information, a D2D resource pool use condition, Radio Resource Control, RRC, state information and a valid timer,
wherein the D2D resource pool information comprises: D2D discovery resource pool information, and/or D2D communication resource pool information, and/or D2D communication Scheduling Assignment, SA, resource pool information, and/or D2D communication data resource pool information;
the D2D resource pool use condition comprises: limited use or unlimited use; the limited use is use under an abnormal condition, or use within coverage of a cellular network, or use outside the coverage of the cellular network; and
the RRC state information indicates an RRC state of UE capable of using the D2D resource pool information, and comprises: a CONNECTED state, or an IDLE state, or the CONNECTED state and the IDLE state.

17. A Device-to-Device, D2D, resource pool configuration system, **characterized by**, comprising:
an Evolved Node B, eNB, configured to send D2D resource pool configuration information; and
a D2D User Equipment, UE, configured to receive the D2D resource pool configuration information, acquire a D2D sending resource from the D2D resource pool configuration information and perform D2D sending.

18. The system according to claim 17, wherein the D2D UE comprises:
a receiving unit, configured to receive the D2D resource pool configuration information; and
a processing unit, configured to acquire the D2D sending resource from the D2D resource pool configuration information, and perform D2D sending.

19. The system according to claim 18, wherein the D2D resource pool configuration information comprises at least one of: D2D resource pool information, a D2D resource pool use condition, Radio Resource Control, RRC, state information and a valid timer.

20. The system according to claim 19, wherein
the D2D resource pool information comprises at least one of: D2D discovery resource pool information, D2D communication resource pool information, D2D communication Scheduling Assignment, SA, resource pool information, and D2D communication data resource pool information;
the D2D resource pool use condition comprises: limited use or unlimited use; the limited use is use under an abnormal condition, or use within coverage of a cellular network, or use outside the coverage of the cellular network; and
the RRC state information indicates an RRC state of UE capable of using the D2D resource pool information, and comprises: a CONNECTED state, or an IDLE state, or the CONNECTED state and the IDLE state.

21. The system according to claim 18, wherein
the receiving unit is configured to, when the D2D UE is in the IDLE state, receive the D2D resource pool configuration information from a System Information Block, SIB; and
correspondingly, the processing unit is configured to, if the D2D resource pool use condition comprised in the D2D resource pool configuration information is use under the abnormal condition and the D2D UE is to perform D2D sending, initiate an RRC connection establishment process, when the D2D UE successfully establishes an RRC connection, interact with the eNB to acquire dedicated D2D sending resource information allocated by the eNB, and when the D2D UE has tried to establish the RRC connection for N times but fails, N being a positive integer more than or equal to 1, determine that the D2D UE is under the abnormal condition and acquire the D2D resource pool information from the D2D resource pool configuration information and contend for the D2D sending resource for D2D sending according to the D2D resource pool information.

22. The system according to claim 18, wherein
the receiving unit is configured for the D2D UE in the CONNECTED state to receive the D2D resource pool configuration information from the SIB or RRC dedicated signalling; and
correspondingly, the processing unit is configured to:
if the D2D resource pool configuration information comprises the valid timer, start the valid timer after the D2D UE in the CONNECTED state enters the abnormal condition, and
perform, in a validity period of the valid timer, D2D sending by using a D2D resource pool received from a cell configured with the valid timer, or perform, in the validity period of the valid timer, D2D sending by using the D2D resource pool associated with the valid timer, or perform, in the validity period of the valid timer, D2D sending by using the D2D resource pool associated with the valid timer.

23. The system according to claim 18, wherein the processing unit is configured to:
when the RRC state information comprised in the received D2D resource pool configuration information is the IDLE state, determine to use the D2D resource pool information in the D2D resource pool configuration information when the D2D UE is in the IDLE state;
when the RRC state information comprised in the received D2D resource pool configuration information is the CONNECTED state, determine to use the D2D resource pool information in the D2D resource pool configuration information when the D2D UE is in the CONNECTED state;
when the use condition comprised in the received D2D resource pool configuration information is use within the coverage of the cellular network, determine to use the D2D resource pool information in the D2D resource pool configuration information when the D2D UE is located within the coverage of the cellular network; and
when the use condition comprised in the received D2D resource pool configuration information is use outside the coverage of the cellular network, determine to use the D2D resource pool information in the D2D resource pool configuration information when the D2D UE is located outside the coverage of the cellular network.

24. The system according to claim 17, wherein the eNB comprises:
a storage unit, configured to store the D2D resource pool configuration information; and
a sending unit, configured to send the D2D resource pool configuration information to enable the D2D UE which receives the D2D resource pool configuration information to acquire the D2D sending resource from the D2D resource pool configuration information and perform D2D sending.
